Europäisches Patentamt

European Patent Office

Office européen des brevets

(11) Veröffentlichungsnummer : **0 175 125**
**B1**

(12) **EUROPÄISCHE PATENTSCHRIFT**

(45) Veröffentlichungstag der Patentschrift :
09.11.88

(21) Anmeldenummer : 85109938.2

(22) Anmeldetag : 07.08.85

(51) Int. Cl.⁴ : **G 05 D 23/19, F 24 D 19/10**

(54) Thermostat mit Energiesparvorrichtung für ein Raum-Heizgerät.

(30) Priorität : 23.08.84 NO 843363

(43) Veröffentlichungstag der Anmeldung :
26.03.86 Patentblatt 86/13

(45) Bekanntmachung des Hinweises auf die Patenterteilung : 09.11.88 Patentblatt 88/45

(84) Benannte Vertragsstaaten :
DE SE

(56) Entgegenhaltungen :
GB-A- 2 019 046

(73) Patentinhaber : **Siemens Aktiengesellschaft Berlin
und München
Wittelsbacherplatz 2
D-8000 München 2 (DE)**

(72) Erfinder : **Haukaas, Björn
Bergveien 6 B
N-2010 Strömmen (NO)**
Erfinder : **Amundsen, Aage-Rolf
Skytterveien 26
N-7080 Heimdal (NO)**

## Beschreibung

Die Erfindung betrifft einen Thermostaten mit Energiesparvorrichtung für ein Raum-Heizgerät mit einem Sensor, der bei schneller Abnahme der Raumtemperatur eine Begrenzungsphase auslöst, während deren Dauer die Energiesparvorrichtung die Wärmeabgabe des Raum-Heizgeräts auf einen vor Ansprechen des Sensors vorliegenden Wert.

Ein derartiger Thermostat ist aus der DE-A1-29 15 219 bekannt. Mit der Energiesparvorrichtung soll verhindert werden, daß beim Öffnen eines Fensters oder einer Tür, beispielsweise zum Lüften, der Thermostat, der einen erhöhten Wärmedarf feststellt, die Leistungsabgabe des Raum-Heizgerätes entsprechend erhöht. Bei der bekannten Anordnung wird während der Begrenzungsphase das Raum-Heizgerät ganz ausgeschaltet oder zumindest auf eine verringerte Leistung geschaltet. Die Begrenzungsphase wird entweder nach einer durch die Schaltung vorgegebenen Zeit oder durch Anstieg der Raumtemperatur beendet. Dabei hat die Beendigung der Begrenzungsphase nach einer festen Zeit den Nachteil, daß dann z.B. das Fenster unter Umständen noch geöffnet ist, so daß es trotzdem zu einem hohen Energieverlust kommt. Die Beendigung der Begrenzungsphase durch Anstieg der Raumtemperatur ist verhältnismäßig unzuverlässig, da dieser Anstieg sehr langsam erfolgen kann. Wenn die Energiesparvorrichtung durch eine äußere Störung, d. h. ohne Lüftungsvorgang in die Begrenzungsphase gekommen ist, so tritt unter Umständen überhaupt kein Temperaturanstieg auf und die Begrenzungsphase wird von der Energiesparvorrichtung nicht mehr verlassen.

Aufgabe der Erfindung ist es daher, einen Thermostat mit Energiesparvorrichtung der eingangs genannten Art so auszuführen, daß eine Begrenzungsphase nicht zu früh beendet wird, daß aber andererseits die Begrenzungsphase auch bei Auslösung aufgrund von Störungseinflüssen wieder verlassen wird.

Diese Aufgabe wird erfindungsgemäß durch die im Patentanspruch 1 angegebene Erfindung gelöst.

Durch diesen geringen Anstieg der Wärmeleistung wird sichergestellt, daß die Energiesparvorrichtung auch nach einer Störung nicht unbegrenzt in der Begrenzungsphase verharrt.

Der Anstieg kann vorteilhafterweise etwa 15 % pro Stunde betragen.

Die Begrenzungsphase wird beendet, sobald die Raumtemperatur wieder ansteigt. Zusätzlich wird die Begrenzungsphase auch dann beendet, wenn der Thermostat keine Wärme mehr anfordert. In diesem Fall ist der dem Thermostaten vorgegebene Sollwert der Raumtemperatur auch in der Begrenzungsphase erreicht worden, so daß keine weitere Begrenzung erforderlich ist.

Eine Raumtemperaturänderung kann auch mittelbar über die Änderung der Leistungsanforderung des Raum-Heizgerätes ermittelt werden. Ein Lüftungsvorgang führt nämlich stets zu einer schnellen Erhöhung der Leistungsanforderung, die somit als Kriterium für die Einleitung der Begrenzungsphase benutzt werden kann. In diesem Fall wird zweckmäßigerweise die Änderung der Leistungsanforderung durch Vergleich der aktuellen Leistungsanforderung mit der mittleren Leistungsanforderung über eine unmittelbar vorangehende Zeitspanne mit stabilem Regelungsverlauf erfaßt.

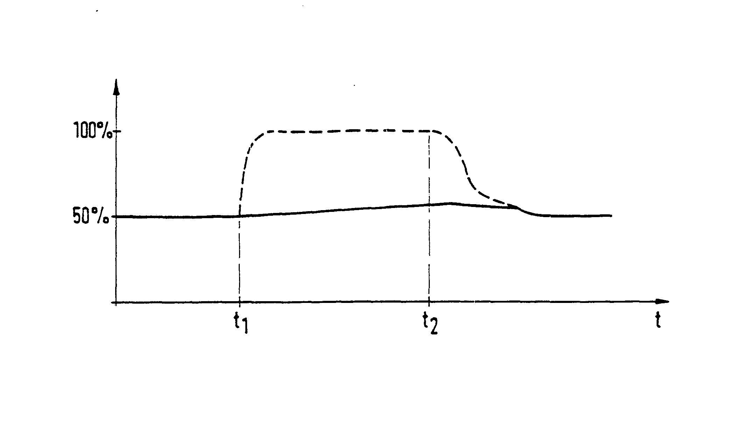

Der erfindungsgemäße Thermostat mit Energiesparvorrichtung wird nachfolgend anhand der Figur beispielhaft näher erläutert.

Dabei ist angenommen, daß das Raum-Heizgerät im Normal-betrieb z. B. mit 50 % seiner Maximalleistung arbeitet. Zum Zeitpunkt $t_1$ wird zum Lüften ein Fenster geöffnet. Dadurch sinkt die Raumtemperatur sehr schnell und die gestrichelt eingezeichnete Leistungsanforderung durch den Thermostaten steigt ebenfalls sehr schnell auf die Maximalleistung an. Die Leistung des Raumheizgerätes folgt jedoch dieser Anforderungen nicht, da die Energiesparvorrichtung wirksam wird. Diese erkennt nach dem Zeitpunkt $t_1$ aufgrund des Unterschieds zwischen dem aktuellen Wert der Leistungsanforderung und der mittleren vorangehenden Leistungsanforderung, daß ein Lüftungsvorgang erfolgt. Daraufhin wird die Leistung des Heizgerätes auf einen Wert begrenzt, dert zum Zeitpunkt $t_1$ gleich der mittleren vorangehenden Leistung ist und dann geringfügig ansteigt.

Zum Zeitpunkt $t_2$ wird das Fenster wieder geschlossen. Abhängig vom Speicherverhalten des Raumes und dem Unterschied zwischen Raumtemperatur und Außentemperatur fällt die Leistungsanforderung wieder auf den ursprünglichen Wert. Damit erkennt die Energiesparschaltung, daß der Lüftungsvorgang beendet ist und die Begrenzungsphase wird beendet. Die abgegebene Leistung paßt sich dann wieder der tatsächlichen Leistungsanforderung an.

Wenn die Begrenzungsphase fälschlicherweise ohne Lüftungsvorgang ausgelöst wurde, so wird das Raum-Heizgerät aufgrund des Leistungsanstiegs in der Begrenzungsphase im Laufe der Zeit dennoch die tatsächliche Leistungsanforderung erfüllen. Sobald die dem Thermostaten vorgegebene Raum-Solltemperatur erreicht ist, beendet die Energiesparvorrichtung die Begrenzungsphase und der Thermostatkann nach der Störung wieder normal weiterarbeiten.

## Patentansprüche

1. Thermostat mit Energiesparvorrichtung für ein Raumheizgerät mit einem Sensor, der bei schneller Abnahme der Raumtemperatur eine Begrenzungsphase auslöst, während deren Dauer die Energiesparvorrichtung die Wärmeabgabe des Raumheizgerätes auf einen vor Ansprechen des Sensors vorliegenden Wert begrenzt, dadurch gekennzeichnet, daß die Energiesparvorrichtung bei Beginn der Begrenzungsphase diesen Wert als Grenzwert zugrende legt und dann diesen Grenzwert während der Dauer der Begrenzungsphase kontinuierlich bis zum Erreichen eines oberhalb des Grenzwertes liegenden Wert solange anhebt, bis entweder die dem Thermostaten vorgegebene Raum-Solltemperatur erreicht ist oder die Raumtemperatur wieder ansteigt, wodurch die Begrenzungsphase beendet wird.

2. Thermostat nach Anspruch 1, dadurch gekennzeichnet, daß die Anstiegssteilheit der Wärmeabgabe etwa 15 % pro Stunde beträgt.

3. Thermostat nach Anspruch 1 oder 2, dadurch gekennzeichnet, daß die Raumtemperaturänderung mittelbar über die Änderung der Leistungsanforderung des Raum-Heizgerätes ermittelt wird.

4. Thermostat nach Anspruch 3, dadurch gekennzeichnet, daß die Änderung der Leistungsanforderung durch Vergleich der aktuellen Leistungsanforderung mit der mittleren Leistungsanforderung über eine den Zeitpunkt der Auslösung der Begrenzungsphase unmittelbar vorangehende Zeitspanne mit stabilem Regelungsverlauf erfaßt wird.

**Claims**

1. A thermostat with an energy saving device for a space heating apparatus having a sensor which, when the room temperature falls quickly, initiates a limiting phase during which the energy saving device limits the heat given off by the space heating apparatus to the value obtaining before the sensor responded, characterised in that at the start of the limiting phase the energy saving device takes this value as the basis for the limiting value and then raises this limiting value continuously during the limiting phase until it reaches a value above the limiting valueand until either the desired room temperature for which the thermostat is set is reached or the room temperature rises again, whereby the limiting phase is ended.

2. A thermostat according to claim 1, characterised in that the rate at which the heat given off increases is about 15 % per hour.

3. A thermostat according to claim or claim 2, characterised in that the alteration in room temperature is determined indirectly by the alteration of the power demand of the space heating device.

4. A thermostat according to claim 3, characterised in that the alteration in the power demand is determined by comparing the actual power demand with the mean power demand over a period having a stable control characteristic immediately preceding the initiation of the limiting phase.

**Revendications**

1. Thermostat comportant un dispositif d'économie d'énergie pour un appareil de chauffage d'un local, avec un capteur qui, dans le cas d'une diminution rapide de la température ambiante, déclenche une phase de limitation, pendant la durée de laquelle le dispositif d'économie d'énergie limite l'émission de chaleur de l'appareil de chauffage du local à une valeur présente avant la réponse du capteur, caractérisé par le fait qu'au début de la phase de limitation, le dispositif d'économie d'énergie prend pour base cette valeur en tant que valeur limite, puis augmente continûment cette valeur limite, pendant la durée de la phase de limitation, jusqu'à une valeur supérieure à la valeur limite et ce jusqu'à ce que la température de consigne de la pièce, prédéterminée par le thermostat soit atteinte ou que la température ambiante augmente à nouveau, ce qui entraîne l'arrêt de la phase de limitation.

2. Thermostat suivant la revendication 1, caractérisé par le fait que la pente de l'accroissement de l'émission de chaleur est égale à environ 15 % par heure.

3. Thermostat suivant la revendication 1 ou 2, caractérisé par le fait que la variation de la température ambiante est déterminée indirectement par l'intermédiaire de la variation de la demande de puissance de l'appareil de chauffage du local.

4. Thermostat suivant la revendication 3, caractérisé par le fait que la variation de la demande de puissance est détectée par comparaison de la demande réelle de puissance et de la demande moyenne de puissance pendant un intervalle de temps précédant directement l'instant du déclenchement de la phase de limitation, avec une allure de régulation stable.